# EUROPÄISCHE PATENTSCHRIFT

(11) **EP 3 141 164 B1**
(45) Veröffentlichungstag und Bekanntmachung des Hinweises auf die Patenterteilung: **17.01.2018**
(21) Anmeldenummer: 16183706.7
(22) Anmeldetag: 11.08.2016
(51) Int. Cl.: A47J 31/36, A47J 31/60

(54) **GETRÄNKEZUBEREITUNGSVORRICHTUNG, SYSTEM SOWIE BETRIEBSVERFAHREN**
BEVERAGE PREPARATION DEVICE, SYSTEM AND METHOD OF OPERATION
DISPOSITIF DE PRÉPARATION DE BOISSONS, SYSTÈME ET PROCÉDÉ DE FONCTIONNEMENT

(30) Priorität: 08.09.2015 DE 102015115077
(43) Veröffentlichungstag der Anmeldung: 15.03.2017
(73) Patentinhaber: Eugster/Frismag AG, 8580 Amriswil (CH)
(72) Erfinder: Riessbeck, Wolfgang, 8597 Landschlacht (CH); Peyrot, Pascal, 9402 Mörschwil (CH); Oberholzer, Arnold, 9200 Gossau (CH)
(74) Vertreter: Patentanwälte Behrmann Wagner PartG mbB

(56) Entgegenhaltungen:
- EP-A1- 2 633 789
- WO-A1-2011/067264
- WO-A1-2013/119497
- WO-A1-2014/015643

## Beschreibung

Die Erfindung betrifft eine Getränkezubereitungsvorrichtung zum Herstellen von Getränken aus Getränkesubstratkapseln gemäß dem Oberbegriff des Anspruchs 1, mit einer Injektionskammereinrichtung zum Injizieren von Wasser in eine Getränkesubstratkapsel (zum Auslaugen und/oder Auflösen von in der Getränkesubstratkapsel befindlichem Getränkesubstrat, beispielsweise Granulat, Sirup, Teeblätter oder Kaffeemehl) zur Getränkeerzeugung, umfassend einen ersten Injektionskammerteil und einen zweiten Injektionskammerteil, wobei der erste und der zweite Injektionskammerteil zum Öffnen und Schließen der Injektionskammereinrichtung relativ zueinander zwischen einer Öffnungsrelativposition und einer Schließrelativposition verstellbar sind, und wobei der erste Injektionskammerteil eine Dichtung, zur insbesondere stirnseitigen, dichtenden Anlage an einer in der Injektionskammereinrichtung aufgenommenen (nicht zur Getränkezubereitungsvorrichtung gehörenden) Getränkesubstratkapsel in der Schließrelativposition der Injektionskammerteile in einem Getränkezubereitungsbetriebsmodus aufweist, und wobei die Dichtung derart ausgebildet und angeordnet ist, dass diese bei in der Injektionskammereinrichtung aufgenommener Getränkesubstratkapsel durch dichtendes Anliegen an der Getränkesubstratkapsel einen Dichtbereich umschließt und diesen gegenüber einem Umgebungsbereich abdichtet, und wobei aus dem Dichtbereich ein Getränkeauslauf zum Ausleiten von hergestelltem Getränk aus der Injektionskammereinrichtung ausmündet, und wobei die Injektionskammereinrichtung in einem Spülbetriebsmodus, in dem die Dichtung nicht dichtend an einer Getränkesubstratkapsel anliegt (bevorzugt ist keine Getränkesubstratkapsel zwischen den Injektionskammerteilen angeordnet), mit Spülmedium, insbesondere kaltes oder von Heizmitteln der Getränkezubereitungsvorrichtung erwärmtes Wasser und/oder Dampf beaufschlagbar ist, welches vorzugsweise über den Getränkeauslauf abfließen kann.

Ferner betrifft die Erfindung ein System mit einer Getränkezubereitungsvorrichtung mit einer zwischen den Injektionskammerteilen angeordneten Getränkesubstratkapsel gemäß Anspruch 9 sowie ein Verfahren zum Betreiben einer Getränkezubereitungsvorrichtung gemäß Anspruch 10.

Zum Verarbeiten starrer Getränkesubstratkapseln sind Getränkezubereitungsvorrichtungen mit sogenannter offener Injektionskammereinrichtung bekannt geworden, in welchen die Getränkesubstratkapsel einen Bestandteil der Injektionskammer bildet bzw. benötigt wird, um diese gegenüber zwei einander gegenüberliegenden Injektionskammerteilen abzudichten. Hierzu stützen sich zwei relativ zueinander verstellbare Injektionskammerteile über jeweils eine Dichtung einander gegenüberliegend in einer Schließrelativposition an der Getränkesubstratkapsel ab und dichten somit einen Einlass- bzw. Injektionsbereich sowie einen gegenüberliegenden Auslassbereich (Dichtbereich) von der Umgebung ab. Es besteht der Wunsch, auch solche offenen Injektionskammereinrichtungen, bei denen nicht die Injektionskammerteile unmittelbar vollumfänglich gegeneinander abgedichtet sind, nach einem Getränkeherstellungsprozess und nach Entfernen der Getränkesubstratkapsel aus einem Bereich zwischen den Injektionskammerteilen zu reinigen oder zu entkalken. Dabei besteht die Anforderung, dass beim Spülen, Reinigen oder Entkalken das jeweilige Spülmedium ein definiertes maximales Level bzw. Niveau nicht übersteigen darf, um zum verhindern, dass das Spülmedium in einem oberen Bereich aus einer von den Injektionskammerteilen definierten Öffnung austritt und mit Bauteilen in Kontakt kommt, die hierfür nicht ausgelegt sind und Schaden nehmen könnten.

Aus der WO 2014/015643A1 ist eine Kapselmaschine zum Herstellen von Getränken bekannt, bei welcher ein mit dem Bezugszeichen 211 gekennzeichneter Abflusskanal der Injektionskammer vorgesehen ist, der den einzigen Abfluss für Spülmedium während eines Spülbetriebsmodus darstellt. Der Getränkeauslauf ist im Spülmodus über ein Rückschlagventil verschlossen. Es besteht die Gefahr des Überlaufens der Injektionskammer im Spülbetrieb bei zu großem Spülmediumvolumenstrom.

Ausgehend von dem vorgenannten Stand der Technik liegt der Erfindung der Gedanke zugrunde, eine Getränkezubereitungsvorrichtung mit einer sogenannten, zuvor erläuterten offenen Injektionskammereinrichtung anzugeben, die zum Spülen, Reinigen und/oder Entkalken mit Spülmedium beaufschlagbar ist, ohne dass dieses die Injektionskammereinrichtung unkontrolliert verlassen kann. Ferner besteht die Aufgabe darin, ein Verfahren zum Betreiben einer solchen Getränkezubereitungsvorrichtung anzugeben.

Diese Aufgabe wird hinsichtlich der Getränkezubereitungsvorrichtung mit den Merkmalen des Anspruchs 1 gelöst, d.h. bei einer im Oberbegriff als gattungsgemäß definierten Getränkezubereitungsvorrichtung dadurch, dass aus dem, vorzugsweise unmittelbar an die Dichtung angeordneten Umgebungsbereich ein, insbesondere am ersten Injektionskammerteil angeordneter Spülmediumauslauf ausmündet, durch welchen in dem Spülbetriebsmodus zusätzlich zu dem Getränkeauslass Spülmedium abfließen kann. Mit anderen Worten wird zusätzlich zu dem innerhalb des Dichtbereichs ausmündenden, bevorzugt kanalförmigen, Getränkeauslaufs ein außerhalb des Dichtbereichs ausmündender, bevorzugt kanalförmiger, Spülmediumauslauf vorgesehen und das Spülmedium kann durch den Spülmediumauslauf und gleichzeitig durch den, bevorzugt nicht mechanisch verschließbaren, d.h. vorzugsweise dauerhaft geöffneten bzw. vorzugsweise dauerhaft durchströmbaren, Getränkeauslauf aus einem Bereich zwischen den Injektionskammerteilen abfließen.

Hinsichtlich des Verfahrens wird die Aufgabe mit den Merkmalen des Anspruchs 10 gelöst, nämlich dadurch, dass der Injektionskammereinrichtung im Spülbetriebsmodus Spülmedium, insbesondere Wasser, bevorzugt von Heizmitteln der Getränkezubereitungsvorrichtung erwärmtes Wasser oder kaltes Wasser und/oder Dampf zugeleitet wird, welches gleichzeitig über den Getränkeauslauf und den Spülmediumauslauf, insbesondere zu einem gemeinsamen Auffangbehältnis, abfließt.

Vorteilhafte Weiterbildungen der Erfindung sind in den Unteransprüchen angegeben. In den Rahmen der Erfindung fallen zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, neben Getränkeauslauf, durch welchen bei zwischen den Injektionskammerteilen geklemmter Getränkesubstratkapsel, d.h. in einem Getränkebezugs- bzw. Zubereitungsbetriebsmodus, ein Getränk aus der Getränkesubstratkapsel ausströmen kann, mindestens einen weiteren Auslauf, nämlich einen nicht zwingend jedoch bevorzugt zumindest abschnittsweise an dem gleichen Bauteil, insbesondere Kunststoffspritzgussteil wie den Getränkeauslass ausgebildeten Spülmediumauslauf vorzusehen, der aus einem benachbart zum Dichtbereich angeordneten, bevorzugt von dem ersten Injektionskammerteil unmittelbar begrenzten Umgebungsbereich ausmündet, so dass das bei einem Spülbetriebsmodus in die Injektionskammereinrichtung eingeleitete Spülmedium über den Spülmediumauslauf ausströmen kann und bevorzugt (jedoch nicht zwingend) zusätzlich auch über den (ohnehin vorhandenen) Getränkeauslauf. Anders ausgedrückt wird in einer bevorzugten Ausführungsform der Spülmedium-Volumenstrom in dem Spülbetriebsmodus aufgeteilt auf den Getränkeauslauf und den mindestens einen Spülmediumauslauf und ggf., falls vorgesehen und geöffnet, mindestens einen später noch zu erläuternden Restspülmediumauslauf.

Durch das Vorsehen des entsprechend dimensionierten Spülmediumauslaufs zusätzlich zu dem Getränkeauslauf ist es zum einen möglich, die Injektionskammereinrichtung mit einem vergleichsweise hohen Spülmedium-Volumenstrom zu beaufschlagen und gleichzeitig sicherzustellen, dass das Spülmedium ein kritisches Niveau innerhalb der Injektionskammereinrichtung nicht überschreitet und dann unkontrolliert nach oben aus der offenen Injektionskammer ausströmt und hierdurch ggf. nicht hierfür ausgelegte Bauteile der Getränkezubereitungsvorrichtung beschädigt. Insbesondere verhindert das Verhältnis zwischen zugeführtem Spülmedium-Volumenstrom und der Durchmesserwahl des Spülmediumauslaufs und für den bevorzugten Fall, dass das Spülmedium zusätzlich gleichzeitig über den Getränkeauslauf ausströmt der Durchmesserwahl des Getränkeauslaufs das Übersteigen des vorerwähnten kritischen Niveaus.

Da der, bevorzugt am ersten Injektionskammerteil angeordnete Spülmediumauslauf nicht wie der Getränkeauslauf aus dem von der, bevorzugt als Elastomerdichtung ausgebildeten Dichtung umgebenen Dichtbereich ausmündet, fließt durch den Spülmediumauslauf während des Getränkezubereitungsbetriebsmodus bevorzugt kein Getränk aus, so dass es zum zusätzlichen Ausleiten von Spülmedium aus dem Spülmediumauslauf notwendig ist, dass die vorerwähnte Dichtung des ersten Injektionskammerteils im Spülbetriebsmodus nicht dichtend im Getränkezubereitungsbetriebsmodus zwischen den Injektionskammerteilen angeordneten, bevorzugt geklemmten Getränkesubstratkapsel anliegt, wobei bevorzugt hierzu im Spülbetriebsmodus keine Getränkekapsel zwischen den Injektionskammerteilen angeordnet ist.

Zum Ansteuern von Funktionseinheiten der Getränkezubereitungsvorrichtung, wie einer Pumpe zur Versorgung der Injektionskammereinrichtung mit zu injizierendem Wasser im Getränkezubereitungsbetriebsmodus sowie zum Versorgen der Injektionskammereinrichtung mit Spülmedium im Spülbetriebsmodus sowie ggf. zur Ansteuerung eines fakultativen Antriebs zum Relativverstellen der Injektionskammerteile umfasst die Getränkezubereitungsvorrichtung bevorzugt eine Steuereinheit. Grundsätzlich ist es möglich, und bevorzugt, eine manuelle Relativverstellbarkeit der Injektionskammerteile zu realisieren.

Unabhängig davon, ob die Injektionskammerteile manuell und/oder motorisch relativ zueinander verstellbar sind, sind diese zwischen der Öffnungsrelativposition, in der eine neue Getränkekapsel einlegbar bzw. zuführbar ist, und einer Schließrelativposition, in der eine zuvor eingelegte Getränkesubstratkapsel zur Injektion von Wasser und zum Ausleiten vom fertigen Getränk durch den Getränkeauslass dichtend zwischen den Injektionskammerteilen verstellbar. Dabei ist es besonders bevorzugt, wenn eine Spülrelativposition der Injektionskammerteile mit der Schließrelativposition zusammenfällt bzw. dass es sich bei diesen Relativpositionen um die gleiche Relativposition handelt. Es ist jedoch auch eine Ausführungsform realisierbar, bei der durch entsprechende Ansteuerung des Antriebs über die Steuereinheit oder bevorzugt manuell eine Spülrelativposition zwischen den Injektionskammerteilen einstellbar ist, die sowohl von der Öffnungsrelativposition als auch von der Schließrelativposition unterschiedlich ist. Beispielsweise indem der Abstand der Injektionskammerteile in der Relativposition verglichen mit der Schließrelativposition noch weiter verringert ist.

Das Merkmal des Spülbetriebsmodus sowie das Merkmal des Spülmediums sind weit auszulegen bzw. zu verstehen. So kann es sich zum einen um ein einfaches bzw. klassisches Spülen der Injektionskammer nach einem Getränkezubereitungsprozess und bei dem Spülmedium reines kaltes oder erwärmtes Wasser und/oder um reinen Dampf handeln. Es ist jedoch auch möglich bzw. realisierbar, dass der Spülbetriebsmodus als Entkalkungsmodus ausgestaltet, bei welchem das Spülmedium eine chemische Entkalkungssubstanz ist oder enthält, insbesondere eine Säure. Auch ist es möglich, dass es sich bei dem Spülbetriebsmodus um einen Reinigungsbetriebsmodus handelt und das Spülmedium eine Reinigungssubstanz ist oder enthält. Unabhängig von der konkreten Ausgestaltung des Spülbetriebsmodus und der Wahl des Spülmediums stellt die Erfindung durch die bevorzugte (nicht zwingend notwendige) Aufteilung des Volumenstroms zumindest auf den Getränkeauslass und den Spülmediumauslass sicher, dass trotz Sicherstellung einer Spülung des Getränkeauslasses zusätzlich sichergestellt ist, dass ein kritisches Spülmediumniveau innerhalb der dann bevorzugt getränkesubstratkapselfreien Injektionskammer nicht überschritten wird.

Am ersten und/oder zweiten Injektionskammerteil sind bevorzugt Öffnungsmittel, insbesondere Aufstechmittel zum Aufstechen der Getränkesubstratkapsel, zum Ermöglichen einer Wasserinjektion und zum Ausleiten von fertigem Getränk zu dem Getränkeauslass angeordnet.

Ganz besonders bevorzugt ist eine Ausführungsform der Getränkezubereitungsvorrichtung, bei der der Getränkeauslauf und der Spülmediumauslauf zu einem gemeinsamen Auslauf zusammengeführt sind, dass also dem Getränkeauslauf und dem Spülmediumauslauf mindestens ein gemeinsamer Auslass zugeordnet ist. Hierdurch ist es möglich, das bevorzugt gleichzeitige, durch den Getränkeauslauf und den Spülmediumauslauf abfließende Spülmedium in demselben Auffangbehältnis, insbesondere einem Getränkebehältnis, auffangen zu können. Es ist auch eine alternative Ausführungsvariante realisierbar, bei der der Spülmediumauslauf und der Getränkeauslauf separate Auslässe aufweisen, die bevorzugt derart relativ zueinander angeordnet sind, dass das aus den separaten Auslässen gleichzeitig austretende Spülmedium in demselben (gemeinsamen) Auffangbehältnis aufgefangen werden kann. Bei dem Auffangbehältnis kann es sich um ein Auffangbehältnis der Getränkezubereitungsvorrichtung, beispielsweise eine unterhalb des Getränkeauslaufs befindliche Tropfschale, handeln oder alternativ um ein von der Getränkezubereitungsvorrichtung separates Auffangbehältnis, beispielsweise ein auf einer Tropfschalenabdeckplatte der Getränkezubereitungsvorrichtung unterhalb des Auslasses des Getränkeauslaufs platzierbares Auffangbehältnis, beispielsweise ein Getränkebehältnis. Bei der konkreten Ausgestaltung und Anordnung von Getränkeauslauf und Spülmediumauslauf ist es bevorzugt, wenn beide in Richtung von dem zweiten Injektionskammerteil wegweisende Richtung laufen.

Grundsätzlich ist es möglich, dass ein Einlass bzw. Einströmbereich des Spülmediumauslaufs auf Höhe des Einlasses bzw. Einströmbereichs des Getränkeauslaufs oder darüber angeordnet ist. Zweckmäßig ist jedoch eine Anordnung des Einströmbereichs des Spülmediumauslaufs unterhalb des Einströmbereichs des Getränkeauslaufs, insbesondere im Bereich eines Injektionskammerbogens, um somit die Injektionskammer durch den Spülmediumauslauf möglichst weitgehend entleeren zu können.

Um eine vollständige Entleerung der Injektionskammer nach einem Spülprozess zu ermöglichen, also eine Auslaufmöglichkeit für Restspülmedium bereitzustellen, ist in Weiterbildung der Erfindung mit Vorteil vorgesehen, dass zusätzlich zu dem Spülmediumauslauf ein Restspülmediumauslauf vorgesehen ist, insbesondere an dem ersten Injektionskammerteil, wobei besonders bevorzugt ist, wenn ein Einströmbereich (Einströmöffnung) des Restspülmediumauslaufs unterhalb eines Einströmbereichs des Spülmediumauslaufs sowie unterhalb eines Einströmbereichs des Getränkeauslaufs angeordnet ist. Als besonders vorteilhaft hat es sich herausgestellt, wenn der Restspülmediumauslauf in eine Richtung von dem ersten Injektionskammerteil weg führt, insbesondere derart, dass das durch den Restspülmediumauslauf austretende Spülmedium in einem Auffangbehälter auffangbar ist, der unterschiedlich ist von einem Auffangbehältnis zum Auffangen von Spülmedium aus dem Spülmediumauslauf und dem Getränkeauslauf, wobei es grundsätzlich auch denkbar ist, einen gemeinsamen Auffangbehälter, insbesondere eine Tropfschale der Getränkezubereitungsvorrichtung vorzusehen.

Grundsätzlich ist es möglich, auf einen vorerwähnten Restspülmediumauslauf zu verzichten oder für den Fall des Vorsehens eines solchen Restspülmediumauslaufs den Restspülmediumauslauf dauerhaft geöffnet auszubilden, dass also während des Ausströmens von Spülmedium durch den Getränkeauslauf und den Spülmediumauslauf zumindest über einen größten Zeitabschnitt des Spülbetriebsmodus auch Spülmedium durch den Restspülmediumauslauf ausströmt. Bevorzugt ist jedoch eine Ausführungsform, bei der der Restspülmediumauslauf verschließbar ist, um diesen in einer, vorzugsweise, jedoch nicht zwingend, mit der Schließrelativposition zusammenfallenden, Spülrelativposition der Injektionskammerteile zu verschließen bzw. geschlossen zu halten. Dies kann beispielsweise dadurch realisiert werden, dass an dem dem Restspülmediumauslauf gegenüberliegende Injektionskammerteil, also bei einer Anordnung des Spülmediumauslaufs an dem ersten Injektionskammerteil an dem zweiten Injektionskammerteil, ein Verschlusselement, insbesondere in Form eines Fortsatzes, angeordnet ist, das in der Spülrelativposition dichtend mit dem Restspülmediumauslauf zusammenwirkt, insbesondere derart, dass der Restspülmediumauslauf beim Verstellen eines der Injektionskammerteile in die Öffnungsrelativposition automatisch geöffnet wird. Hierdurch kann ggf. auch nach einem Getränkebezugsprozess in die Injektionskammer gelangende Getränkerest zugeführt bzw. die Injektionskammer schneller getrocknet werden.

Um die von den Injektionskammerteilen begrenzte Injektionskammer in der vorzugsweise mit der Schließrelativposition zusammenfallenden Spülrelativposition nach unten hin und seitlich, insbesondere zumindest bis auf Höhe der Einströmbereiche des Getränkeauslasses und des Spülmediumauslasses abzudichten, ist bevorzugt mindestens eine (untere) Injektionskammerdichtung vorgesehen, die die Injektionskammerteile in einem unteren und einem seitlichen Bereich abdichtet, um einen unkontrollierten Austritt von Spülmedium in einem unteren und seitlichen Bereich zwischen den Injektionskammerteilen hindurch zu vermeiden. Bevorzugt handelt es sich nicht um eine vollumfänglich dichtende Dichtung, sondern diese lässt die obere Öffnung zwischen den Injektionskammerteilen frei. Besonders zweckmäßig ist es, wenn sich die (untere) Injektionskammerdichtung am ersten oder zweiten Injektionskammerteil befindet und durch Relativverstellen der Injektionskammerteile in die Spülrelativposition zur dichten Anlage am gegenüberliegenden Injektionskammerteil gelangt.

Bevorzugt ist der wenigstens eine Restspülmediumauslauf in einer vorerwähnten unteren Injektionskammerdichtung angeordnet.

Im Hinblick auf die verstellbare Anordnung der Injektionskammerteile relativ zueinander gibt es unterschiedliche Möglichkeiten. Grundsätzlich ist es denkbar, dass beide Injektionskammerteile verstellbar sind. Besonders zweckmäßig ist es jedoch, wenn eines der Injektionskammerteile ortsfest, d.h. statisch, angeordnet ist und das gegenüberliegende Injektionskammerteil aktiv relativ zu dem feststehenden Injektionskammerteil manuell und/oder mittels eines elektromotorischen Antriebs, bevorzugt translatorisch, insbesondere rein translatorisch, zwischen der Öffnungsrelativposition und der Schließrelativposition und ggf. einer von der Schließrelativposition abweichenden Spülrelativposition verstellbar ist. Ganz besonders bevorzugt ist es dabei, wenn das erste, den Getränkeauslauf und/oder den Spülmediumauslauf aufweisende Injektionskammerteil das bewegliche bzw. verstellbare Injektionskammerteil ist und das zweite Injektionskammerteil, welches bevorzugt mindestens einen Fluidkanal zum Zuleiten von Wasser zur Wasserinjektion und/oder zum Zuleiten von Spülmedium aufweist, das ortsfeste bzw. statische Injektionskammerteil ist.

Vorerwähnter Fluidkanal zum Zuleiten von Wasser zur Wasserinjektion und/oder zum Zuleiten von Spülmedium in die Injektionskammereinrichtung mündet bevorzugt in einem (Dicht-) Bereich aus, der von einer bevorzugt als Elastomerdichtung ausgebildete Anlagedichtung des zweiten Injektionskammerteils umgeben ist, die sich in der Schließrelativposition, insbesondere stirnseitig, an der Getränkesubstratkapsel, vorzugsweise der Dichtung des ersten Injektionskammerteils gegenüberliegend abstützen kann. Grundsätzlich ist es auch möglich, separate Fluidkanäle für das Zuleiten von Wasser zur Wasserinjektion und das Zuleiten von Spülmedium in die Injektionskammereinrichtung vorzusehen, wobei in diesem Fall der zuletzt genannte Fluidkanal nicht zwingend in dem von der Anlagedichtung umschlossenen Dichtbereich ausmünden muss, sondern auch benachbart dazu ausmünden kann.

Als besonders vorteilhaft hat es sich herausgestellt, wenn, wie eingangs erwähnt, der Spülmediumzufluss-Volumenstrom so auf die Durchmesser bzw. freien Querschnitte von Spülmediumauslauf und Getränkeauslauf (und ggf. geöffnetem Restspülmediumauslauf) abgestimmt ist, dass das Spülmedium nicht durch eine obere, vorzugsweise oberhalb der Einströmbereiche von Getränkeauslauf und Spülmediumauslauf gelegene Öffnung ausströmen kann und insbesondere ein maximales, insbesondere definiertes Füllstandsniveau (Spülmediumniveau) innerhalb der (oben offenen) Injektionskammereinrichtung bzw. Injektionskammer nicht überschritten wird. Dies kann so realisiert sein, dass eine Pumpe zum Versorgen der Injektionskammereinrichtung mit dem Spülmedium so eingestellt oder angesteuert, insbesondere geregelt, ist, dass vorerläuterte Vorgabe sicher erfüllt ist.

Die Erfindung führt auch auf ein Getränkezubereitungssystem mit einer nach dem Konzept der Erfindung ausgebildeten Getränkezubereitungsvorrichtung, insbesondere einer Kaffeezubereitungsvorrichtung sowie einer in der Injektionskammereinrichtung zwischen den Injektionskammerteilen aufgenommenen Getränkesubstratkapsel, an der sich in der Schließrelativposition dichtend sowohl der erste Injektionskammerteil als auch der zweite Injektionskammerteil abstützen.

Ferner führt die Erfindung auf ein Verfahren zum Betreiben einer erfindungsgemäßen Getränkezubereitungsvorrichtung. Erfindungsgemäß ist vorgesehen, dass der Injektionskammereinrichtung im Spülbetriebsmodus Spülmedium zugeleitet wird, welches über den Spülmediumauslauf und bevorzugt sowohl über den Getränkeauslauf und den Spülmediumauslauf gleichzeitig, insbesondere zu einem gemeinsamen Auffangbehältnis, abfließt. Bevorzugt befindet sich während dieses Spülbetriebsmodus keine Getränkesubstratkapsel zwischen den Injektionskammerteilen. Für den Fall des Vorsehens eines Restspülmediumauslaufs ist es bevorzugt, wenn das durch diesen, bevorzugt tropfenweise, austretende Restspülmedium zu einem Auffangbehältnis der Getränkezubereitungsvorrichtung, insbesondere einer Tropfschale, geleitet wird, welches unterschiedlich ist von dem (gemeinsamen) Auffangbehältnis, in das Medium aus dem Spülmediumauslauf und ggf. dem Getränkeauslauf insbesondere über einen gemeinsamen oder alternativ separate Auslässe strömt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Ausschnittsdarstellung einer Getränkezubereitungsvorrichtung in einem Spülbetriebsmodus,
- Fig. 2:: die Getränkezubereitungsvorrichtung gemäß Fig. 1 in einem Getränkezubereitungsbetriebsmodus,
- Fig. 3 bis Fig. 5:: teilweise geschnittene Detailansichten einer bevorzugten Ausführungsform einer Getränkezubereitungsvorrichtung mit zusätzlich zu einem Spülmedium- und Getränkeauslauf vorgesehenen Restspülmediumausläufen.

In den Figuren sind gleiche Elemente und Elemente mit der gleichen Funktion mit den gleichen Bezugszeichen gekennzeichnet.

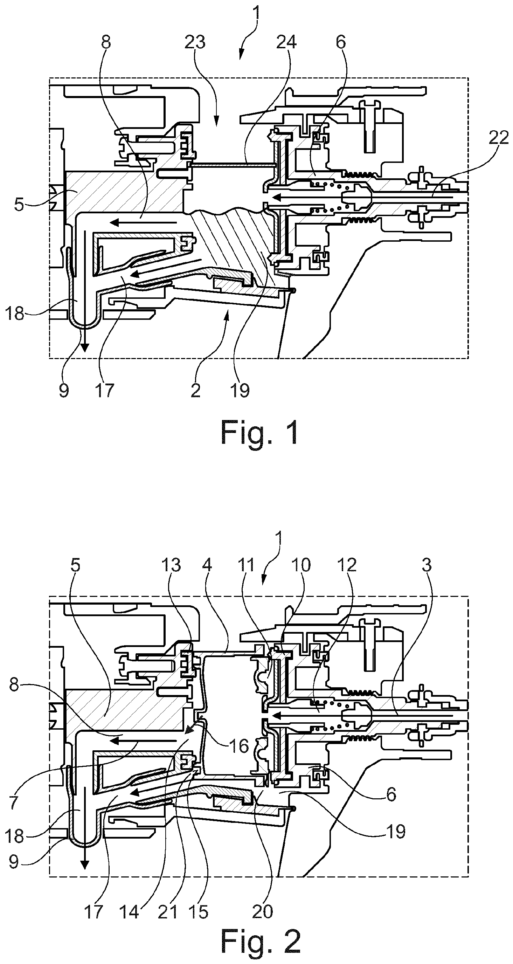

In den Fig. 1 und 2 ist ausschnittsweise eine als Kapselmaschine ausgebildete Getränkezubereitungsvorrichtung 1, hier beispielhaft in der Form einer Kaffeemaschine, gezeigt. Die Getränkezubereitungsvorrichtung 1 umfasst eine Injektionskammereinrichtung 2, mit welcher in einem in Fig. 2 gezeigten Getränkezubereitungsbetriebsmodus mithilfe von nicht gezeigten Heizmitteln der Getränkezubereitungsvorrichtung 1 erwärmtes Wasser 3 in eine Getränkesubstratkapsel 4 injizierbar ist, die sich in der gezeigten Schließrelativposition zwischen einem mittels eines nicht gezeigten Antriebs, hier beispielhaft rein translatorisch verstellbaren Injektionskammerteil 5 und einem ortsfesten zweiten Injektionskammerteil 6 befindet und gegenüber diesen Injektionskammerteilen 5, 6, wie später noch erläutert werden wird, abgedichtet ist. Das erwärmte Wasser 3 durchströmt dabei die Getränkesubstratkapsel 4 und - je nach Ausgestaltung des darin befindlichen Substrates - laugt es dieses aus, wie im Beispiel von Kaffeemehl oder es löst dieses, beispielsweise ein Granulat, auf. Das fertige Getränk 7 kann sodann über ein Getränkeauslauf 8 zu einem Auslass 9 und durch diesen in ein nicht gezeigte Getränkebehältnis strömen.

Aus Fig. 2 ist zu erkennen, dass in der Schließrelativposition das zweite Injektionskammerteil 6 über eine Anlagedichtung 10 stirnseitig an der Getränkesubstratkapsel 4 anliegt und somit einen innerhalb der umfangsgeschlossenen Anlagedichtung 10 liegenden Bereich 11 gegenüber der Umgebung abdichtet.

In diesen Bereich 11 mündet ein Fluidkanal 12 für das Wasser 3 und für Spülmedium in einem später noch zu erläuternden Spülbetriebsmodus.

Auf der von der Anlagedichtung 10 abgewandten Stirnseite liegt die Getränkesubstratkapsel 4 an einer Dichtung 13 des ersten Injektionskammerteils 5 an, so dass ein innerhalb der umfangsgeschlossenen Dichtung 13 liegender Dichtbereich 14 abgedichtet ist, gegenüber einem weiter außen liegenden und an die Dichtung 13 angrenzenden Umgebungsbereich 15. Zu erkennen ist, dass der Getränkeauslauf 8 aus dem Dichtbereich 14 ausmündet, d.h. dass ein Einströmbereich 16 des Getränkeauslaufes 8 innerhalb des von der Dichtung 13 umschlossenen Dichtbereiches 14 liegt.

Aus Fig. 2 ist zu erkennen, dass aus dem Umgebungsbereich 15 ein Spülmediumauslauf 17 ausmündet, aus welchem in dem gezeigten Getränkezubereitungsbetriebsmodus kein Getränk ausströmt - der Spülmediumauslauf 17 dient, wie später noch erläutert werden wird, ausschließlich zum Ausleiten von Spülmedium.

Spülmediumauslauf 17 und Getränkeauslauf 8 münden in einen gemeinsamen, hier im Wesentlichen vertikal orientierten Auslauf 18, der endseitig den (gemeinsamen) Auslass 9 aufweist.

In Fig. 2 ist weiter zu erkennen, dass die Injektionskammer neben dem Spülmediumauslass 17 und dem Getränkeauslauf 8, die beide fest am ersten Injektionskammerteil 5 ausgebildet sind, einen Restspülmediumauslass 19 aufweisen, der in eine Richtung weg von dem ersten Injektionskammerteil 5 führt. Ein Einströmbereich 20 des Restspülmediumauslaufs 19 befindet sich unterhalb des Einströmbereichs 16 des Getränkeauslasses 8 sowie unterhalb eines Einströmbereichs 21 des Spülmediumauslaufs, wobei der Einströmbereich 21 des Spülmediumbereichs sich wiederum unterhalb und beabstandet zum Einströmbereich 16 des Getränkeauslaufs 8 befindet.

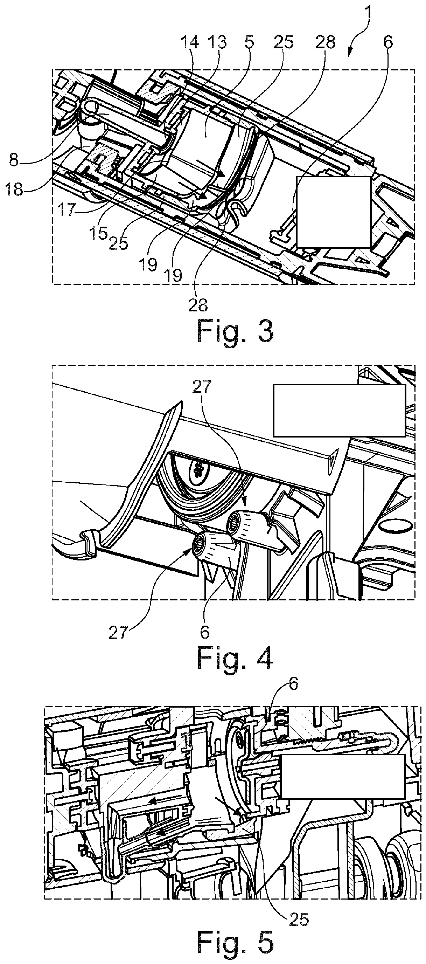

In dem gezeigten Ausführungsbeispiel ist der Restspülmediumauslauf 19 dauerhaft geöffnet. Alternativ ist es denkbar, auf einen Restspülmediumauslauf 19 zu verzichten oder diesen, wie später noch anhand der Fig. 3 bis 5 erläutert werden wird, während des Spülbetriebsmodus zu verschließen, was bevorzugt ist.

In Fig. 1 befindet sich die Getränkezubereitungsvorrichtung 1 in einem Spülbetriebsmodus. Die Injektionskammerteile 5, 6 befinden sich hierzu in einer Spülrelativposition, die bei dem gezeigten Ausführungsbeispiel mit der Schließrelativposition zusammenfällt bzw. mit dieser identisch ist. Im Unterschied zu dem Getränkeherstellungsbetriebsmodus gemäß Fig. 2 befindet sich in dem Spülbetriebsmodus gemäß Fig. 1 keine Getränkesubstratkapsel zwischen den Injektionskammerteilen 5, 6. Über den Fluidkanal 12 wird durch das zweite Injektionskammerteil 6 Spülmedium 22 in die Injektionskammereinrichtung 2 geleitet, d.h. in einen Bereich zwischen den Injektionskammerteilen 5, 6. Diese begrenzen eine obere Öffnung 23, zu der im Getränkezubereitungsbetriebsmodus gemäß Fig. 2 kein Getränk gelangen kann, da die Injektionskammerteile 5, 6 dichtend an einer Getränkesubstratkapsel 4 anliegen.

Das durch den Fluidkanal 12 zuströmende Spülmedium strömt gegenüberliegend der Zuleitung gleichzeitig durch den Getränkeauslauf 8 und den Spülmediumauslauf 17 aus, hier über den gemeinsamen (nicht notwendigerweise vertikalen) Auslauf 18 und dessen (gemeinsamen) Auslass 9. Gleichzeitig kann für den gezeigten Fall des Vorsehens eines geöffneten Restspülmediumauslaufs 19 Spülmedium über diesen Auslauf austreten, insbesondere hin zu einer Tropfschale (nicht gezeigte Getränkezubereitungsvorrichtung). Die Pumpe (nicht gezeigt) zum Versorgen der Injektionskammereinrichtung 2 mit Spülmedium ist so eingestellt oder geregelt, dass der Spülmedium-Volumenstrom so bemessen ist, dass ein kritisches bzw. maximales Niveau 24 (maximaler Füllstand) der Injektionskammer nicht überschritten wird und somit ein Austreten von Spülmedium durch die Öffnung 23 nach oben sicher vermieden wird.

In den Fig. 3 bis 5 ist ein bevorzugtes Ausführungsbeispiel einer ausschnittsweise dargestellten Getränkezubereitungsvorrichtung 1 gezeigt, wobei im Hinblick auf die Erläuterung der Funktion der einzelnen Bauteile auf die Darstellungen gemäß den Fig. 1 und 2 mit zugehöriger Figurenbeschreibung verwiesen wird.

Bitte allgemeinen Beschreibungsteil dahingehend überarbeiten, dass der Restspülmediumauslauf bevorzugt am ersten Injektionskammerteil angeordnet ist, alternativ am zweiten und ggf. von beiden Injektionskammerteilen begrenzt ist, insbesondere bei einer dauerhaft geöffneten Ausführungsform.

In Fig. 3 ist in der Zeichnungsebene links das erste, aktiv verstellbare Injektionskammerteil 5 gezeigt, mit seinem Getränkeauslauf 8 und dem darunter angeordneten Spülmediumauslauf 17, die dann in dem gemeinsamen Auslauf 18 ausmünden. Zu erkennen ist auch die Dichtung 13, hier eine Elastomerdichtung, die den Dichtbereich 14 gegenüber dem Umgebungsbereich 15 abdichtet.

Zu erkennen ist, dass das erste Injektionskammerteil 5 eine untere Kammerdichtung 25, ebenfalls eine Elastomerdichtung, aufweist, die die Injektionskammer in der Schließrelativposition nach unten abdichtet und die dafür Sorge trägt, dass im Spülbetriebsmodus Spülmedium nicht unkontrolliert in einem seitlichen unteren Bereich der Injektionskammer austritt. In der Injektionskammerdichtung 25 sind zwei Restspülmediumausläufe 19 angeordnet, deren Einströmbereich noch unterhalb des Einströmbereichs des Spülmediumauslasses 17 angeordnet ist. Die beiden Restspülmediumausläufe 19 werden in der Schließrelativposition mithilfe von hier beispielhaft zapfen- bzw. domförmigen Dichtelementen 27 verschlossen, die hier an dem zweiten Injektionskammerteil rechts angeordnet sind und die beim Verstellen des ersten Injektionskammerteils 5 in die Schließrelativposition in die zusammen mit dem ersten Injektionskammerteil 5 verstellbare untere Injektionskammerdichtung 25, genauer in die dort vorgesehenen Kanäle 28 der Restspülmediumausläufe 19, eintauchen.

In Fig. 5 ist die Schließrelativposition gezeigt. Zu erkennen ist, dass die untere Injektionskammerdichtung 25 dichtend an dem ortsfesten zweiten Injektionskammerteil 6 anliegt.

Sobald das Injektionskammerteil 5 von dem zweiten Injektionskammerteil 6 verstellt wird, werden die Restspülmediumausläufe 19 geöffnet und etwaiges Restspülmedium kann durch diese in eine Tropfschale (nicht gezeigt) austreten.

### Bezugszeichen

- 1: Getränkezubereitungsvorrichtung
- 2: Injektionskammereinrichtung
- 3: Wasser
- 4: Getränkesubstratkapsel
- 5: erstes Injektionskammerteil
- 6: zweites Injektionskammerteil
- 7: Getränk
- 8: Getränkeauslauf
- 9: Auslass
- 10: Anlagedichtung
- 11: Bereich
- 12: Fluidkanal
- 13: Dichtung
- 14: Dichtbereich
- 15: Umgebungsbereich
- 16: Einströmbereich des Getränkeauslaufs
- 17: Spülmediumauslauf
- 18: Auslauf
- 19: Restspülmediumauslauf
- 20: Einströmbereich des Spülmediumauslaufs
- 21: Einströmbereich des Spülmediumauslaufs
- 22: Spülmedium
- 23: obere Öffnung
- 24: kritisches (maximales) Niveau
- 25: untere Injektionskammerdichtung
- 26: Kanäle
- 27: Dichtelemente

## Patentansprüche

1. Getränkezubereitungsvorrichtung mit einer Injektionskammereinrichtung (2) zum Injizieren von Wasser (3) in eine Getränkesubstratkapsel (4) zur Getränkeerzeugung, umfassend einen ersten Injektionskammerteil (5) und einen zweiten Injektionskammerteil (6), wobei der erste und der zweite Injektionskammerteil (5, 6) zum Öffnen und Schließen der Injektionskammereinrichtung (2) relativ zueinander zwischen einer Öffnungsrelativposition und einer die Schließrelativposition verstellbar sind, und wobei der erste Injektionskammerteil (5) eine Dichtung zur, insbesondere stirnseitigen, dichtenden Anlage an einer Getränkesubstratkapsel (4) in der Schließrelativposition in einem Getränkezubereitungsbetriebsmodus aufweist, und wobei die Dichtung (13) derart ausgebildet und angeordnet ist, dass diese bei in der Injektionskammereinrichtung (2) aufgenommener Getränkesubstratkapsel (4) durch dichtendes Anliegen an der Getränkesubstratkapsel (4) einen Dichtbereich (14) umschließt und diesen gegenüber einem Umgebungsbereich (15) abdichtet, und wobei aus dem Dichtbereich (14) ein Getränkeauslauf (8) zum Ausleiten von hergestelltem Getränk aus der Injektionskammereinrichtung (2) ausmündet, und wobei die Injektionskammereinrichtung (2) in einem Spülbetriebsmodus, in dem die Dichtung (13) nicht dichtend an einer Getränkesubstratkapsel (4) anliegt, mit Spülmedium (22) beaufschlagbar ist,
**dadurch gekennzeichnet,**
**dass** aus dem Umgebungsbereich (15) ein, insbesondere am ersten Injektionskammerteil angeordneter Spülmediumauslauf (17) ausmündet, derart dass in dem Spülbetriebsmodus Spülmedium (22) gleichzeitig durch den Getränkeauslauf (8) und den Spülmediumauslauf (17) abfließen kann.

2. Getränkezubereitungsvorrichtung nach Anspruch 1,
**dadurch gekennzeichnet,**
**dass** der Getränkeauslauf (8) und der Spülmediumauslauf (17) zu einem gemeinsamen Auslauf (18) zusammengeführt sind und/oder derart angeordnet sind, dass durch den Getränkeauslauf (8) und den Spülmediumauslauf (17) ausfließendes Spülmedium (22) in einem gemeinsamen Auffangbehältnis der Getränkezubereitungsvorrichtung (1) und/oder einem unterhalb eines Auslasses (9) des Getränkeauslaufs (8), bevorzugt auf einer Tropfschalenabdeckplatte der Getränkezubereitungsvorrichtung (1), platzierbaren Auffangbehältnisses, insbesondere einem Getränkebehältnis, auffangbar ist.

3. Getränkezubereitungsvorrichtung nach einem der Ansprüche 1 oder 2,
**dadurch gekennzeichnet,**
**dass** der Spülmediumauslauf (17) aus einem unterhalb des Dichtbereichs (14) angeordneten Abschnitt des Umgebungsbereichs (15) ausmündet.

4. Getränkezubereitungsvorrichtung nach einem der vorhergehenden Ansprüche,
**dadurch gekennzeichnet,**
**dass** die Injektionskammereinrichtung (2) einen zu einem Auffangbehälter der Getränkezubereitungsvorrichtung (1) führenden, insbesondere an dem ersten Injektionskammerteil (5) angeordneten, Restspülmediumauslauf (19) aufweist, dessen Einströmbereich tiefer angeordnet ist, als ein Einströmbereich des Spülmediumauslaufs (20, 21) und ein Einströmbereich des Getränkeauslaufs (16).

5. Getränkezubereitungsvorrichtung nach Anspruch 4,
**dadurch gekennzeichnet,**
**dass** der Restspülmediumauslauf (19) in der Öffnungsrelativposition geöffnet und in einer, vorzugsweise mit der Schließrelativposition identischen oder zu der Schließrelativposition und der Öffnungsrelativposition unterschiedlichen, Spülrelativposition verschlossen oder alternativ dauerhaft geöffnet ist.

6. Getränkezubereitungsvorrichtung nach einem der vorhergehenden Ansprüche,
**dadurch gekennzeichnet,**
**dass** der zweite Injektionskammerteil (6) statisch und der erste Injektionskammerteil (5) zusammen mit dem Getränkeauslauf (8) und/oder dem Spülmediumauslauf (17), insbesondere translatorisch, bevorzugt mittels eines elektromotorischen Antriebs verstellbar ist.

7. Getränkezubereitungsvorrichtung nach einem der vorhergehenden Ansprüche,
**dadurch gekennzeichnet,**
**dass** mindestens ein Fluidkanal (12) zum Zuleiten von Wasser (3) zur Wasserinjektion und/oder zum Zuleiten von Spülmedium (22) in die Injektionskammereinrichtung (2) an der zweiten Injektionskammeranordnung angeordnet und in einem Bereich ausmündet, der von einer Anlagedichtung (10) umgeben ist, die sich in der Schließrelativposition an der Getränkesubstratkapsel (4) dichtend abstützen kann.

8. Getränkezubereitungsvorrichtung nach einem der vorhergehenden Ansprüche,
**dadurch gekennzeichnet,**
**dass** eine Pumpe zum Versorgen der Injektionskammereinrichtung (2) mit Spülmedium (22) so eingestellt oder angesteuert, insbesondere geregelt ist, dass der in die Injektionskammereinrichtung (2) zugeführte Spülmediumvolumenstrom über den Getränkeauslauf (8) und den Spülmedlumauslauf (17) und, falls vorgesehen und geöffnet den Restspülmediumauslauf (19), ausfließen kann und nicht durch eine von der ersten Injektionskammeranordnung und der zweiten Injektionskammeranordnung begrenzte obere Öffnung (23) ausströmt, vorzugsweise ein definiertes, maximales Niveau (24) innerhalb der Injektionskammereinrichtung (2) nicht überschreitet.

9. Getränkezubereitungssystem, umfassend eine Getränkezubereitungsvorrichtung nach einem der vorhergehenden Ansprüche sowie eine in der Injektionskammereinrichtung (2) aufgenommene Getränkesubstratkapsel (4), an der sich in der Schließrelativposition dichtend sowohl der erste Injektionskammerteil (5) als auch der zweite Injektionskammerteil (6) abstützen.

10. Verfahren zum Betreiben einer Getränkezubereitungsvorrichtung nach einem der Ansprüche 1 bis 8,
**dadurch gekennzeichnet,**
**dass** der Injektionskammereinrichtung (2) im Spülbetriebsmodus Spülmedium (22), insbesondere Wasser (3), bevorzugt von Heizmitteln der Getränkezubereitungsvorrichtung (1) erwärmtes, Wasser (3) und/oder Dampf zugeleitet wird, welches über den Getränkeauslauf (8) und gleichzeitig den Spülmediumauslauf (17), insbesondere zu einem gemeinsamen, Auffangbehältnis abfließt.

## Claims

1. Beverage preparation device with an injection chamber device (2) for the injecting of water (3) in a beverage substrate capsule (4) for beverage production, including a first injection chamber part (5) and a second injection chamber part (6), wherein the first and the second injection chamber part (5, 6) are adjustable relative to one another between an open relative position and a closed relative position for the opening and closing of the injection chamber device (2), and wherein the first injection chamber part (5) comprises a seal to the in particular front-side sealing abutment on a beverage substrate capsule (4) in the closed relative position in a beverage preparation operating mode, and wherein the seal (13) is configured and arranged in such a way that it encloses a sealing area (14) through sealing abutment on the beverage substrate capsule (4) in the case of a beverage substrate capsule (4) being received in the injection chamber device (2) and seals this area against a surrounding area (15) and wherein, for discharging of a produced beverage out of the injection chamber device (2) a beverage outlet (8) opens to the outside of the sealing area (14), and wherein the injection chamber device (2) in a flushing operating mode, in which the seal (13) abuts against a beverage substrate capsule (4) in a non-sealing manner, can be applied with a flushing fluid (22),
**characterized in that**,
a flushing fluid outlet (17), arranged in particular on the first injection chamber part, opens to the outside of the surrounding area (15) in such a way that flushing fluid (22) can flow out through the beverage outlet (8) and the flushing fluid outlet (17) at the same time.

2. Beverage preparation device according to Claim 1,
**characterized in that**
the beverage outlet (8) and the flushing fluid outlet (17) are guided together to a common outlet (18) and/or are arranged in such a way that flushing fluid (22) flowing out through the beverage outlet (8) and the flushing fluid outlet (17) can be collected in a common collecting container of the beverage preparation device (1) and/or a collecting container, in particular a beverage container that can be placed underneath an outlet (9) of the beverage outlet (8), preferably on a drip tray cover panel of the beverage preparation device (1).

3. Beverage preparation device according to one of claims 1 or 2,
**characterized in that**
the flushing fluid outlet (17) opens to the outside of a section of the surrounding area (15) arranged underneath the sealing area (14).

4. Beverage preparation device according to one of the preceding claims,
**characterized in that**
the injection chamber device (2) comprises a remaining flushing fluid outlet (19) leading to a collection container of the beverage preparation device (1), and in particular arranged on the first injection chamber part (5), the inflow region of which is arranged deeper than an inflow region of the flushing fluid outlet (20, 21) and an inflow region of the beverage outlet (16).

5. Beverage preparation device according to Claim 4,
**characterized**
**in that** the remaining flushing fluid outlet (19) is opened in the open relative position and is closed or alternatively, permanently opened in a flushing relative position, preferably identical to the closed relative position or varying to the closed relative position and the open relative position.

6. Beverage preparation device according to one of the preceding claims, **characterized**
**in that** the second injection chamber part (6) can be adjusted statically, and the first injection chamber part (5), along with the beverage outlet (8) and/or the flushing fluid outlet (17), can be adjusted in particular in a translational manner, preferably by means of an electromotive drive.

7. Beverage preparation device according to one of the preceding claims,
**characterized in that**
at least one fluid channel (12) is arranged for the feeding of water (3) for water injection and/or for the feeding of flushing fluid (22) into the injection chamber device (2) on the second injection chamber assembly and opens out into an area, which is enclosed by a contact seal (10), which can support itself on the beverage substrate capsule (4) in a sealing manner in the closed relative position.

8. Beverage preparation device according to one of the preceding claims,
**characterized in that**
a pump for supplying the injection chamber device (2) with flushing fluid (22) is set or controlled, particularly regulated in such a way that the flushing fluid volume flow fed into the injection chamber device (2) can flow out via the beverage outlet (8) and the flushing fluid outlet (17) and, if provided and opened, the remaining flushing fluid outlet (19), and does not flow out through a upper opening (23) limited by the first injection chamber assembly and the second injection chamber assembly, which preferably does not exceed a defined, maximum level (24) within the injection chamber device (2).

9. Beverage preparation system, including a beverage preparation device according to one of the preceding claims, as well as a beverage substrate capsule (4) received in the injection chamber device (2), on which the first injection chamber part (5) as well as the second injection chamber part (6) support themselves in a sealing manner in the closed relative position.

10. Method for operating a beverage preparation device according to one of Claims 1 to 8,
**characterized in that**
in the flushing operating mode, flushing fluid (22), in particular water (3), preferably water (3) and/or steam heated by heating means of the beverage preparation device (1), is fed to the injection chamber device (2), which drains through the beverage outlet (8), and simultaneously the flushing fluid outlet (17), in particular to a common collecting container.

## Revendications

1. Dispositif de préparation de boissons comprenant un dispositif de chambre d'injection (2) pour injecter de l'eau (3) dans une capsule de substrat de boisson (4) pour produire une boisson, comprenant une première partie de chambre d'injection (5) et une deuxième partie de chambre d'injection (6), la première et la deuxième partie de chambres d'injection (5, 6) pouvant être déplacées l'une par rapport à l'autre entre une la position relative d'ouverture et une position relative de fermeture pour ouvrir et fermer le dispositif de chambre d'injection (2), et la première partie de chambre d'injection (5) présentant un joint d'étanchéité pour l'application hermétique, en particulier du côté frontal, contre une capsule de substrat de boisson (4) dans la position relative de fermeture dans un mode de fonctionnement de préparation de boissons, et le joint d'étanchéité (13) étant réalisé et disposé de telle sorte qu'il entoure une région d'étanchéité (14) lorsque la capsule de substrat de boisson (4) est reçue dans le dispositif de chambre d'injection (2), en s'appliquant hermétiquement contre la capsule de substrat de boisson (4) et qu'il étanchéifie celle-ci par rapport à une région environnante (15), et une sortie de boisson (8) débouchant hors de la région d'étanchéité (14) pour évacuer la boisson produite hors du dispositif de chambre d'injection (2), et le dispositif de chambre d'injection (2) pouvant être sollicité avec un fluide de rinçage (22) dans un mode de fonctionnement de rinçage dans lequel le joint d'étanchéité (13) ne s'applique pas hermétiquement contre une capsule de substrat de boisson (4),
**caractérisé en ce**
**qu'**une sortie de fluide de rinçage (17), disposée notamment au niveau de la première partie de chambre d'injection, débouche hors de la région environnante (15), de telle sorte que dans le mode de fonctionnement de rinçage, du fluide de rinçage (22) puisse s'écouler simultanément à travers la sortie de boisson (8) et la sortie de fluide de rinçage (17).

2. Dispositif de préparation de boissons selon la revendication 1,
**caractérisé en ce que**
la sortie de boisson (8) et la sortie de fluide de rinçage (17) sont réunies en une sortie commune (18) et/ou sont disposées de telle sorte que du fluide de rinçage (22) sortant à travers la sortie de boisson (8) et la sortie de fluide de rinçage (17) puisse parvenir dans un récipient de collecte commun du dispositif de préparation de boissons (1) et/ou dans un récipient de collecte pouvant être placé en dessous d'une sortie (9) de la sortie de boisson (8), de préférence sur une plaque de recouvrement de bac d'égouttage du dispositif de préparation de boissons (1), en particulier un récipient de boisson.

3. Dispositif de préparation de boissons selon l'une quelconque des revendications 1 ou 2,
**caractérisé en ce que**
la sortie de fluide de rinçage (17) débouche hors d'une portion de la région environnante (15) disposée en dessous de la région d'étanchéité (14) .

4. Dispositif de préparation de boissons selon l'une quelconque des revendications précédentes,
**caractérisé en ce que**
le dispositif de chambre d'injection (2) présente une sortie de fluide de rinçage résiduel (19) conduisant à un récipient de collecte du dispositif de préparation de boissons (1), disposée notamment au niveau de la première partie de chambre d'injection (5), dont la région d'afflux est disposée plus bas qu'une région d'afflux de la sortie de fluide de rinçage (20, 21) et qu'une région d'afflux de la sortie de boisson (16).

5. Dispositif de préparation de boissons selon la revendication 4,
**caractérisé en ce que**
la sortie de fluide de rinçage résiduel (19) est ouverte dans la position relative d'ouverture et est fermée, ou en variante, est ouverte de manière permanente, dans une position relative de rinçage de préférence identique à la position relative de fermeture ou différente de la position relative de fermeture et de la position relative d'ouverture.

6. Dispositif de préparation de boissons selon l'une quelconque des revendications précédentes,
**caractérisé en ce que**
la deuxième partie de chambre d'injection (6) est statique et la première partie de chambre d'injection (5) peut être déplacée conjointement avec la sortie de boisson (8) et/ou la sortie de fluide de rinçage (17), en particulier par translation, de préférence au moyen d'un entraînement par moteur électrique.

7. Dispositif de préparation de boissons selon l'une quelconque des revendications précédentes,
**caractérisé en ce**
**qu'**au moins un canal de fluide (12) pour l'alimentation en eau (3) pour injection d'eau et/ou pour l'alimentation en fluide de rinçage (22) est disposé dans le dispositif de chambre d'injection (2) au niveau du deuxième agencement de chambre d'injection et débouche dans une région qui est entourée par un joint d'étanchéité d'installation (10) qui peut s'appuyer hermétiquement dans la position relative de fermeture contre la capsule de substrat de boisson (4) .

8. Dispositif de préparation de boissons selon l'une quelconque des revendications précédentes,
**caractérisé en ce**
**qu'**une pompe pour l'alimentation en fluide de rinçage (22) du dispositif de chambre d'injection (2) est ajustée ou commandée, en particulier est réglée, de telle sorte que le débit volumique de fluide de rinçage acheminé dans le dispositif de chambre d'injection (2) puisse s'écouler par le biais de la sortie de boisson (8) et par le biais de la sortie de fluide de rinçage (17), et, si elle est présente et ouverte, à travers la sortie de fluide de rinçage résiduel (19), et ne s'écoule pas à travers une ouverture supérieure (23) limitée par le premier agencement de chambre d'injection et le deuxième agencement de chambre d'injection, de préférence ne dépasse pas un niveau maximum défini (24) à l'intérieur du dispositif de chambre d'injection (2).

9. Système de préparation de boissons comprenant un dispositif de préparation de boissons selon l'une quelconque des revendications précédentes, ainsi qu'une capsule de substrat de boisson (4) reçue dans le dispositif de chambre d'injection (2), contre laquelle s'appuient hermétiquement à la fois la première partie de chambre d'injection (5) ainsi que la deuxième partie de chambre d'injection (6) dans la position relative de fermeture.

10. Procédé pour faire fonctionner un dispositif de préparation de boissons selon l'une quelconque des revendications 1 à 8,
**caractérisé en ce que**
le dispositif de chambre d'injection (2) est alimenté en mode de fonctionnement de rinçage par du fluide de rinçage (22), en particulier de l'eau (3), de préférence de l'eau (3) et/ou de la vapeur chauffée par des moyens de chauffage du dispositif de préparation de boissons (1), qui s'écoule par le biais de la sortie de boisson (8) et simultanément par le biais de la sortie de fluide de rinçage (17), en particulier vers un récipient de collecte commun.
